Europäisches Patentamt

(19) European Patent Office

Office européen des brevets

(11) Numéro de publication: **0 159 266**
**B1**

(12) **FASCICULE DE BREVET EUROPEEN**

(45) Date de publication du fascicule du brevet: **04.07.90**

(21) Numéro de dépôt: **85400691.3**

(22) Date de dépôt: **05.04.85**

(51) Int. Cl.⁵: **C 23 C 18/00, C 22 C 1/00,
H 01 M 4/02, H 01 M 10/36,
H 01 M 4/66, H 01 M 4/40**

(54) **Procédé pour préparer des électrodes négatives alliées et dispositifs utilisant ces électrodes.**

(30) Priorité: **11.04.84 CA 451782**

(43) Date de publication de la demande:
**23.10.85 Bulletin 85/43**

(45) Mention de la délivrance du brevet:
**04.07.90 Bulletin 90/27**

(84) Etats contractants désignés:
**AT BE CH DE GB IT LI LU NL SE**

(56) Documents cités:
**US-A-4 056 885**

**CHEMICAL ABSTRACTS, vol. 92, no. 11, juin
1980, page 470, résumé no. 188253m,
Columbus, Ohio, US; & JP-A-80 01 058 (SANYO
ELECTRIC CO. LTD) 07-01-1980**

(73) Titulaire: **SOCIETE NATIONALE ELF AQUITAINE
Tour Elf
F-92078 Paris la Défense Cedex 45 (FR)**

(72) Inventeur: **Gauthier, Michel
237 St-Ignace
Laprairie Quebec J5R 1E6 (CA)**
Inventeur: **Fauteux, Denis
400 Rabastalière West Apt. 112
Saint-Bruno de Montarville Quebec J3V1Z9 (CA)**

(74) Mandataire: **Boillot, Marc
SOCIETE NATIONALE ELF AQUITAINE Division
Propriété Industrielle Tour Elf
F-92078 Paris la Défense Cédex 45 (FR)**

Courier Press, Leamington Spa, England.

# EP 0 159 266 B1

**Description**

La présente invention concerne un procédé ou une méthode de préparation d'alliages et éventuellement des électrodes négatives alliées. L'invention concerne aussi à titre de produits industriels nouveaux les électrodes négatives alliées ainsi obtenues. Plus précisément, la présente invention concerne des électrodes négatives alliées, c'est-à-dire où le lithium est présent dans une structure hôte, généralement métallique, à une activité inférieure à celle du lithium métallique.

Dans la plupart des générateurs utilisant des métaux alcalins avec des électrolytes organiques, liquides ou polymères, il a été constaté que le lithium tend à former des films de passivation. La formation de tels films, discutée en détail dans J. P. Gabano, ''Lithium Batteries'', Acad. Press, N.Y. 1983, n'empêche généralement pas les échanges ioniques aux électrodes parce que ces films sont généralement minces et conducteurs ioniques. C'est le cas particulièrement pour les piles non rechargeables. Toutefois, il a été constaté que de tels films peuvent isoler électroniquement une fraction importante du lithium lorsque ce dernier est présent sous forme particulaire ou redéposé électrochimiquement. On constate alors une baisse importante du taux d'utilisation de l'électrode négative, cette baisse devant alors être compensée par un excès de capacité de l'électrode négative.

Ce problème est sensiblement réduit pour les systèmes rechargeables par l'emploi d'alliages de lithium possédant une vitesse de diffusion rapide du lithium et qui sont peu favorables thermodynamiquement à la déposition électrochimique de lithium métallique pur lors de la recharge. Ceci a pour effet d'éviter la formation de dendrites de lithium et l'isolation électrique du lithium fraîchement déposé.

Toutefois ces alliages sont généralement des composés intermétalliques durs et fragiles préparés généralement par voie pyrométallurgique et par conséquent difficiles à élaborer sous formes minces par laminage, par exemple. Ils sont donc le plus souvent utilisés sous formes particulaires pressés avec un liant, un frittés ou encore préparés par voie électrochimique, par exemple sous formes d'accumulateurs assemblés à l'état déchargé. Ces divers procédés développés pour des électrolytes liquides sont peu adaptés aux électrolytes polymères mettant en oeuvre de grandes surfaces et des épaisseurs de l'ordre de quelques dizaines de microns.

Une solution partielle à ces problèmes a été proposée dans le cas d'électrolytes polymères formés de complexes polyéthers combinés avec un sel alcalin, par l'utilisation d'électrodes composites où l'alliage est dispersé sous forme particulaire dans un électrolyte polymère qui agit également comme liant entre les particules et en présence d'un additif de carbone qui a été ajouté pour favoriser les échanges électroniques et ioniques aux interfaces. On se référera particulièrement au brevet canadien publié CA—A—1173900.

Cette solution permet l'élaboration d'électrodes minces et de grandes surfaces particulièrement bien adaptées aux générateurs films minces à électrolytes polymères. Toutefois, il a été observé que de telles électrodes peuvent présenter dans certains cas, particulièrement aux températures d'opération supérieures à 80°C, une baisse progressive du taux d'utilisation des alliages au cours des cycles successifs. De plus, de telles électrodes demeurent coûteuses à préparer compte tenu du coût élevé des alliages de départ généralement préparés par pyrométallurgie, soit environ \$225/kg et qui doivent par la suite être broyés, tamisés puis assemblés sous forme d'électrodes sous atmosphère rigoureusement inertes.

Un objet de l'invention consiste à élaborer un procédé pour la préparation d'alliages dont un des constituants est un métal alcalin ou alcalino-terreux.

Un objet de l'invention vise à la mise au point d'un procédé économique, facile à mettre en oeuvre pour réaliser des électrodes alliées de grandes surfaces et particulièrement bien adaptées, pour ce qui est des propriétés électrochimiques notamment de cyclage, aux générateurs électrochimiques films minces, notamment aux électrolytes polymères.

Un autre objet de l'invention consiste en l'élaboration d'un procédé de mise en oeuvre d'alliages d'un métal hôte avec un métal alcalin ou alcalino-terreux, d'électrodes négatives alliées produites à partir de ces alliages et d'électrolytes de préférence solides à base de polymère.

Un autre objet de l'invention est constitué par la préparation d'alliages d'un métal hôte, notamment choisi parmi l'aluminium, le magnésium, le silicium, le zinc, le bore, le mercure, l'argent, leurs alliages et autres avec un métal alcalin et alcalino-terreux, tel que le lithium, destinés à obtenir des électrodes minces et de grandes surfaces.

Un autre objet de l'invention réside dans la réalisation d'électrodes négatives minces et de grandes surfaces qui sont particulièrement bien adaptées aux électrolytes polymères en films minces.

Un autre objet de la présente invention réside dans la formation de préférence au voisinage de la température ambiante d'alliages spéciaux de métaux alcalins ou alcalino-terreux avec des métaux susceptibles de réagir pour former des intermétalliques, des alliages ou encore des solutions solides.

Un autre objet de l'invention est le contrôle de la composition des alliages formés selon l'invention ainsi que de leur forme finale.

Un autre objet de l'invention est d'effectuer des traitements plus ou moins superficiels après la mise en forme d'une structure hôte, tel que par exemple la formation de solutions solides de lithium dans l'aluminium $Li_\varepsilon Al$ où $\varepsilon$ inférieur à quelques pourcents de Li relativement à Al.

Selon la présente invention, ces alliages sont obtenus en faisant réagir un élément hôte de l'alliage final possédant une forme et une structure favorable avec une solution organique d'un métal alcalin ou

2

alcalino-terreux, de préférence de lithium métallique, généralement sous forme radicalaire également en contact avec une source dudit métal, notamment de lithium, de façon à former des alliages dont la morphologie est fixée par l'élément hôte de départ. L'activité en métal alcalin ou alcalino-terreux, notamment en lithium, peut être contrôlée par le choix de l'élément hôte et par la composition chimique de la solution, notamment dont l'activité radicalaire est généralement inférieure à 600 mVusLi° dans le cas de la préparation d'électrodes négatives.

En d'autres termes, dans son sens large, l'invention concerne une méthode de préparation, de préférence à température ambiante, d'alliages métalliques contenant un métal alcalin ou alcalino-terreux ainsi qu'un métal hôte, caractérisée en ce que l'on prépare, d'une part, une solution organique active dudit métal alcalin ou alcalino-terreux sous forme radicalaire, de même qu'une source dudit métal alcalin ou alcalino-terreux et met en contact ladite solution et ladite source l'une avec l'autre, on prépare, d'autre part une structure métallique renfermant ledit métal hôte, puis on met en présence la structure métallique avec la solution organique, tout en maintenant cette dernière en contact avec la source de métal alcalin ou alcalino-terreux et en gardant la structure métallique séparée de ladite source de métal alcalin ou alcalino-terreux, de manière à former un alliage du métal hôte et du métal alcalin ou alcalino-terreux avec la structure métallique, et jusqu'à ce que l'alliage possède une activité en métal alcalin ou alcalino-terreux correspondant à celle de la solution organique, ladite solution organique servant alors d'agent de transfert du métal alcalin ou alcalino-terreux dissous de la source, vers la structure métallique hôte.

L'invention concerne aussi une méthode de préparation d'électrodes métalliques alliées, caractérisée en ce que l'on met les alliages dont la préparation a été décrite ci-dessus, en contact avec un électrolyte notamment un électrolyte polymère tel que ceux décrits dans les demandes de brevet français de Michel Armand et Michel Duclot numéros 78.32976, 78.32977 et 78.32978, maintenant publiées sous les numéros 2442512, 2442514 et 2442513.

La solution organique de métal alcalin ou alcalino-terreux comprend notamment un mélange de liquides incluant au moins un solvant aprotique polaire compatible avec le métal alcalin ou alcalino-terreux.

Comme exemples de tels solvants, on peut mentionner les solvants éthérés notamment le THF, le dioxolane, les glymes, les éthers couronnes, ainsi que les solvants à base d'amines substituées notamment la N,N,N'-tétraméthyl 1,2-éthane diamine la N,N,N'-tétraméthyl 1,3-propane diamine TMPD et la N,N,N'',N''-pentaméthyl diéthylène triamine PMDET. La solution organique inclut aussi généralement un composé à double liaisons conjuguées, notamment le naphtalène, le biphényle, l'anthracène et la benzophénone, pouvant délocaliser les électrons du métal, et un diluant organique liquide, par exemple le benzène, le toluène, les alcanes, ou des mélanges de ces derniers. La solution organique doit être capable de contrôler l'activité du métal alcalin ou alcalino-terreux préférentiellement à des valeurs inférieures à 600 mVvsLi°.

Pour ce faire les rapports molaires des constituants de la solution organique qui sont le solvant polaire, le composé à doubles liaisons conjuguées et le diluant organique liquide sont de préférence les suivants:

| | |
|---|---|
| solvant polaire: | de $10^{-5}$ à <1 |
| composé à doubles liaisons conjuguées: | $10^{-5}$ à 0,2 |
| diluant organique: | <1. |

Plus particulièrement, ces rapports pourront être les suivants:

| | |
|---|---|
| solvant polaire: | de $10^{-3}$ à 0,2 |
| composé à doubles liaisons conjuguées: | $10^{-4}$ à 0,1 |
| diluant organique: | <1. |

Par exemple, dans le cas où la solution organique est constituée de THF, de naphtalène et de benzène le rapport molaire pourrait être le suivant:

| | |
|---|---|
| TMED ou THF: | environ $9 \times 10^{-2}$ |
| biphényle ou naphtalène: | environ $7 \times 10^{-2}$ |
| benzène: | environ 0,84 |

Quant à la source de métal alcalin ou alcalino-terreux elle est généralement constituée par le métal pur destiné à s'allier avec le métal hôte.

Selon une réalisation préférée de l'invention, l'électrode métallique obtenue possède une morphologie prédéterminée, et pour ce faire, la structure de départ est constituée de façon à ce qu'elle soit un précurseur de la morphologie finale de l'électrode métallique.

Selon une autre réalisation préférée de l'invention, la solution organique est riche en benzène mais pauvre en composés aromatiques et en solvants aprodiques polaires compatibles avec le lithium, ce qui permet d'obtenir des électrodes peu passivées électrochimiquement.

Le métal hôte est habituellement mais non nécessairement, constitué par de l'aluminium. Par exemple, on pourrait utiliser d'autres métaux hôtes pouvant former des alliages ou des intermétalliques avec lesdits métaux alcalins ou alcalino-terreux, notamment le magnésium, le silicium, le zinc, le bore, le mercure, l'argent, leurs alliages et autres.

La structure hôte peut évidemment être quelconque mais il est entendu que sa configuration et sa constitution, et donc sa morphologie doivent être adaptées à l'alliage et le cas échéant à l'électrode négative que l'on désire obtenir. On peut envisager plusieurs possibilités dont quelques exemples seront discutés ci-après.

Il y a le cas où la structure hôte est constituée d'un feuillard métallique notamment de cuivre, de molybdène ou de nickel lequel comprend une couche plane de métal hôte notamment d'aluminium sur au moins une et de préférence sur les deux faces du feuillard métallique. L'épaisseur du feuillard métallique, peut varier préférentiellement entre 1 μm et 20 μm tandis que l'épaisseur de la couche de métal hôte peut varier entre 5 μm et 50 μm, de préférence environ 25 μm. Dans ce cas, la formation de l'alliage s'effectuera par transfert du métal alcalin ou alcalino-terreux, de préférence du lithium vers le métal hôte, obtenant ainsi une pénétration plus ou moins profonde de la couche de métal hôte, dépendant des conditions d'opération.

Selon une autre possibilité, semblable à la précédente, la ou les couches de métal hôte présentent un aspect dendritique. Dans ce cas, l'épaisseur totale du métal hôte sur le feuillard métallique varie entre 5 et 50 μm et se situe de préférence à environ 25 μm.

Une autre possibilité réside dans le fait que la structure hôte est essentiellement constituée par un feuillard du métal hôte. Dans ce cas, il peut y avoir formation d'une couche d'alliage sur une ou deux faces du feuillard métallique. Dans certaines conditions où le transfert de métal alcalin ou alcalino-terreux s'effectue de façon limitée, la soi-distante pénétration de l'alliage sur le feuillard métallique s'arrête à un certain niveau, laissant le métal hôte intact.

La structure hôte peut être constituée par un feuillard métallique, notamment d'aluminium dont l'épaisseur varie habituellement entre 1 μm et 200 μm dans un cas, et entre 5 μm et 500 μm, de préférence entre 50 μm et 300 μm dans l'autre cas. Ce choix d'épaisseur permet d'obtenir, après formation de l'alliage, dans le premier cas, des électrodes alliées entièrement converties de part et d'autre ou au besoin dans le deuxième cas présentant deux faces alliées avec une zone d'aluminium non réagie au centre. Ce dernier cas a l'avantage d'améliorer les propriétés mécaniques de l'alliage en plus d'assurer le contrôle de l'activité du lithium dans l'alliage (environ 380 mVvsLi°) par suite de la coexistence d'aluminium non réagi et d'alliage.

Si d'autre part, comme on vient de l'énoncer, on laisse l'alliage se former en profondeur, le feuillard métallique devient complètrement allié. Cette formation intégrale d'alliage peut même aller jusqu'à modifier les propriétés volumiques et mécaniques du produit résultant au point que le feuillard se désagrège en particules d'alliage qui peuvent servir à la fabrication d'électrodes. Par exemple, ces particules pourraient servir à élaborer les anodes souples décrites dans le brevet canadien publié CA—A—1173900.

Enfin, si l'on désire obtenir éventuellement des sphères, des fibres ou des paillettes d'alliage, on peut tout simplement se servir de sphères, fibres ou paillettes de métal hôte que l'on met en contact avec la solution organique elle-même maintenue en contact avec une source de métal alcalin ou alcalino-terreux. Ces particules d'alliage ne doivent généralement pas dépasser 50 μm sur au moins une de leurs dimensions de façon à permettre l'élaboration d'électrodes en films minces à partir de ces particules. Par exemple, la structure hôte peut être constituée de particules de Al, Mg, Si, Zn, et forme de sphères, de paillettes ou de fibres de granulométrie préalablement choisies de façon à former des alliages de lithium aux stoechiométries voisines de LiAl, $Li_{0,9}Mg$, $Li_{3,5}Si$, LiZn à partir d'une solution radicalaire de ce métal.

Selon une autre réalisation préférée de l'invention, la solution organique est à base de benzène et contient du naphtalène ou du biphényle, de la N,N,N',N'-tétraméthyl 1,2-éthane diamine ou du THF saturée en lithium sous forme radicalaire et renferme un excès de lithium métallique.

Selon une autre réalisation préférée de l'invention, la solution organique est à base de benzène et contient une quantité limitée de lithium radicalaire de façon à contrôler l'activité et la proportion d'alliage formé.

Selon une autre réalisation préférée de l'invention, la structure hôte est un feuillard constitué par une matrice d'aluminium renfermant des fibres ou des paillettes de $Al_3Ni$ ou de $Al_2Cu$.

Lorsque la solution organique renferme du lithium, cette dernière est évidemment en contact avec une source de lithium. Elle peut être à base de naphtalène et de N,N,N',N'-tétraméthyl 1,2-éthane diamine et l'activité du lithium radicalaire se situe alors entre 200 et 400 mVvsLi°. Lorsque la solution est à base de biphényle et de THF l'activité du lithium radicalaire est stable et se situe à 380 mVvsLi°. Si la solution organique de lithium est à base de biphényle et de N,N,N',N'-tétraméthyl 1,2-éthane diamine, l'activité du lithium se trouve entre <50 et 200 mVvsLi°.

La méthode selon l'invention est intéressante puisqu'elle permet un procédé continu où la solution organique possède une activité en lithium contrôlée. De plus comme la solution organique agit en tant qu'agent de transfert du lithium (réaction réversible), on assure une excellente homogénéité de la composition de l'alliage final. Aussi, puisqu'il n'y a pas consommation de ladite solution organique et qu'au surplus les constituants actifs de cette solution peuvent être dilués dans le benzène, par exemple, le procédé est économique et déterminé principalement par le coût du lithium et de l'autre constituant de l'alliage. Ce procédé supprime de plus les étapes ordinaires de synthèse thermique, de broyage, de tamisage et de mise en forme définitive des électrodes alliées présentement utilisées tel que décrit, par exemple, dans le brevet canadien publié CA—A—1173900.

L'invention concerne aussi une électrode métallique constituée par une structure d'un métal hôte de préférence l'aluminium, le magnésium, le zinc, le silicium, le bore, le mercure, leurs alliages, lequel est allié avec un métal alcalin ou alcalino-terreux. Le fait que la structure de l'alliage réalisée selon l'invention soit continue assure au contraire des électrodes composites la conduction électronique nécessaire aux réactions électrochimiques et évite une pénétration poussée de l'alliage par l'électrolyte lors de la mise en contact d'alliage avec l'électrolyte.

La formation de films non conducteurs électroniques à l'interface polymère alliage, et ce à l'intérieur de l'alliage, est aussi évitée parce qu'il n'y a pas de pénétration de l'électrolyte en profondeur dans l'alliage continu.

Selon une réalisation préférée de l'invention, la structure de métal hôte de l'électrode est constitué par un feuillard métallique conducteur électronique notamment de Cu, Ni, Al, Zn, Mo, etc., sur lequel apparaît un dépôt dentritique ou planaire d'un métal hôte tel que Al, Zn, etc. L'épaisseur du métal allié sur le feuillard métallique est d'environ 54 μm à 50 μm. L'usage de dépôt dentritique pour le métal hôte permet après formation de l'alliage d'obtenir des électrodes de grandes surfaces d'échange avec l'électrolyte, donc de soutenir des hautes densités de courant.

Selon une autre réalisation préférée de l'invention, la structure du métal hôte de l'électrode est constituée par un feuillard du métal hôte allié avec le lithium et dont l'épaisseur varie entre environ 5 μm et 500 μm, de préférence entre environ 20 μm et 300 μm.

Selon une autre réalisation préférée de l'invention, la structure du métal hôte de l'électrode est constituée par une matrice d'aluminium qui contient des fibres telles que les intermétalliques $Al_3Ni$ ou du $Al_2Cu$. Cette structure hôte est alliée avec du lithium et à cause de la présence des intermétalliques, elle conserve ses propriétés mécaniques, même lorsque l'activité du lithium dans la solution organique est inférieure à 200 mVvsLi° et que la phase β riche de l'alliage lithium-aluminium est formée.

Selon une autre réalisation préférée de l'invention, la structure du métal hôte de l'électrode est constituée de particules de Al, Mg, Si, Zn, B, Ag alliés avec du lithium aux stoechiométries voisines de LiAl, $Li_{0,9}Mg$, $Li_{3,5}Si$, LiZn.

Selon une autre réalisation préférée de l'invention, la structure hôte correspond à des particules de Al, Mg, Zn, Si préalablement classifiées suivant la taille ou la forme (sphères, paillettes, fibres) par exemples à 20±5 μm de façon à permettre l'élaboration après réaction avec le lithium des électrodes composites selon le brevet canadien publié CA—A—1173900.

Le coût de fabrication desdites électrodes est alors sensiblement réduit et la performance améliorée par le contrôle précis de la taille et de la forme des particules d'alliage préparées suivant la présente invention. Par exemple, les stoechiométries obtenues peuvent être voisines de $Li_{0,9}Mg$, $Li_{3,5}Si$, LiZn, LiAl à partir d'une solution biphényle; de lithium en excès, et de N,N,N',N'-tétraméthyl 1,2-éthane diamine; ou encore $Li_{1-\varepsilon}Al+Al$ à partir d'une solution de naphtalène, de lithium en excès, et de THF. Dans ce dernier cas, l'intérêt de laisser coexister avec l'alliage formé un peu de métal hôte de l'alliage est de favoriser thermodynamiquement le contrôle de l'activité du lithium lors de cycles de recharge successifs.

Un autre avantage important de la présente invention concerne les propriétés électrochimiques remarquables observées avec les électrodes et les dispositifs réalisés avec des électrolytes polymères selon la présente invention. En effet, le procédé revendiqué permet la préparation d'alliages de structure généralement continues dont les propriétés mécaniques sont suffisantes après l'insertion au lithium pour qu'une fois mis en présence de l'électrolyte polymère toutes les parties de l'alliage demeurent en contact électronique. Ceci a pour effet de supprimer le besoin d'additifs de conduction électronique dans l'électrode, notamment le carbone, et d'améliorer les densités d'énergie volumique et massique. D'autre part, le contrôle de la morphologie de l'alliage avant l'insertion du lithium permet de localiser dans l'électrode des zones d'alliages plus ou moins denses et de doser les surfaces d'échanges ioniques entre les zones d'alliage et l'électrolyte polymère. Par exemple, le choix au départ de structures dentritiques (Al, Zn ou autres) ou encore de feuillards minces (Al, Mg ou autres) permettra l'obtention dans le premier cas des électrodes pouvant soutenir des densités de courant élevées et dans le deuxième cas, des électrodes minces de grandes surfaces et de grandes densités d'énergie volumique et massique. On croit que les propriétés électrochimiques remarquables de cyclage des électrodes obtenues en accolant des alliages réalisés. Selon l'invention avec un électrolyte polymère et décrites dans les exemples ci-après tiennent, en partie, aux viscosités élevées des électrolytes polymères qui défavorisent une pénétration importante de l'électrolyte entre les grains plus ou moins disloqués des zones d'alliages ce qui évite la formation de films isolants électroniques et par conséquent la perte du taux d'utilisation de l'électrode au cyclage: de plus l'électrolyte polymère agissant comme liant autour des zones d'alliage aggloméré empêche également la désagrégation de l'alliage au cyclage. Un autre facteur très favorable aux propriétés de cyclage des électrodes négatives selon la présente invention, est que les alliages formés peuvent contenir, au besoin, des zones du métal hôte non réagi, par exemple d'aluminium ou d'aluminium α en présence de l'alliage électrochimiquement actif LiAlβ. Ceci favorise le contrôle de l'activité de l'alliage près de 380 mVvsLi° et s'avère tel qu'illustré dans les exemples ci-dessous très favorable à la préservation de la structure de l'électrode et au maintien des propriétés de cyclage.

Un avantage inhérent du procédé selon l'invention, est de permettre que les variations volumiques

5

importantes se produisant dans la structure hôte lors de la formation de l'alliage se produisent avant que l'alliage ne soit mis en contact avec l'électrolyte et assemblée dans un générateur complet. Cet avantage devient évident si l'on réalise à titre d'exemple un générateur de grande surface à partir d'un feuillard d'aluminium et d'une électrode positive préposée à l'état déchargé on constate alors qu'à la première charge, un tel dispositif tombe rapidement en court-circuit par suite des variations dimensionnelles importants supérieures à 30% du feuillard lors de l'insertion du lithium. Ces variations de dimensions du feuillard provoquent inévitablement des court-circuits dans l'électrolyte, surtout lorsque ce dernier est constitué d'un mince film de polymère (100-10 µm).

L'existence de solutions de lithium métallique, généralement sous forme radicalaire, se rapprochant de celles mises en oeuvre dans la présente invention est connue depuis plusieurs années. On peut se référer par exemple au livre "Electrons in Fluids" (The Nature of Metal-Amonia Solution), J. Jortner & N. R. Kestner, Springer—Verlag, 1973. Selon la présente invention, il a été constaté toutefois que pour certaines compositions de telles solutions peuvent être obtenues avec des activités de lithium contrôlées et voisines du lithium radicalaire par exemple 200—400 mVvsLi° pour des solutions à base de naphtalène et de N,N,N'-tétraméthyl-1,2-éthane diamine; pour des solutions à base de biphényle et de THF l'activité est stable à 380 mVvsLi°, enfin pour des solutions à base de biphényle et de N,N,N'-tétraméthyl-1,2-éthane diamine, l'activité du lithium se situe entre 200 et moins de 50 mVvsLi°. Il a été de plus démontré que de telles solutions peuvent servir d'agents de transfert du lithium pour la préparation à l'état chargé d'électrodes négatives à hautes activités de lithium <400 mVvsLi° et possédant de morphologies contrôlées à partir d'une structure de départ. De plus, le choix préféré mais non limitatif de solutions riches en benzène et pauvres en composés aromatiques et en solvants polaires solvants des ions lithium et compatibles avec le lithium correspond à un procédé de fabrication peu coûteux et conduit à des alliages non passivés électrochimiquement.

L'invention est illustrée sans caractère limitatif par les dessins annexés dans lesquels:

La Figure 1 est un schéma d'un générateur électrochimique utilisant une électrode négative selon la présente invention;

La Figure 2 représente le diagramme de phases du système Li-Al;

La Figure 3 représente une série de courbes illustrant l'allure des plateaux de décharge obtenus à 27°C et à 60 µA.

La Figure 4 est une représentation schématique d'une structure hôte constituée d'un feuillard métallique comprenant une couche plane de métal hôte sur les deux faces;

La Figure 5 est une représentation schématique d'une structure hôte constituée d'un feuillard métallique comprenant deux couches de métal hôte d'aspect dendritique;

La Figure 6 est une représentation schématique d'une structure hôte constituée essentiellement du métal hôte dont les deux surfaces présentent des zones de métal hôte allié;

La Figure 7 est une représentation schématique d'une structure hôte constituée essentiellement du métal hôte allié en profondeur pour préserver la structure du feuillard;

La Figure 8 est une représentation schématique de particules de métal hôte allié résultant de la désagrégation d'un feuillard tel qu'illustré en Figure 7;

La Figure 9 est une représentation schématique de mélange de sphères, fibres et paillettes en métal hôte allié selon la présente invention à leur surface comme dans le cas de la Figure 6;

La Figure 10 est un graphique illustrant les propriétés de cyclage à 26°, 48° et 44°C d'un générateur selon l'invention;

La Figure 11 est un autre graphique illustrant les plateaux de cyclages d'un générateur selon l'invention obtenue à 100°C; et

La Figure 12 est un graphique illustrant le comportement d'anodes selon l'invention.

Les exemples mentionnés ci-dessous et illustrés sur les figures montrent comment le procédé selon l'invention est particulièrement bien adapté à la production d'électrodes minces destinées à des générateurs impliquant des grandes surfaces, généralement à électrolytes polymères et optimisés en vue de l'obtention de densités de courant élevées et de cycles de décharge-charge multiples et de densité d'énergie massique et volumique élevée.

Exemple 1

Cet exemple illustre la dépendance de l'activité en lithium de solutions radicalaires par rapport à la nature et à la concentration de ses éléments constituants.

a) soit une solution radicalaire dans son état final, contenant 0,1 M de naphtalène, 0,06 M de tétraméthyléthane diamine et du benzène, en présence d'une source de lithium métallique en excès.

L'activité du lithium de la solution radicalaire est mesurée précisément selon la chaîne électrochimique suivante:

$$\text{Ni} \left| \begin{array}{c} \text{Li}° \\ \text{(aLi°)} \end{array} \right\| \begin{array}{c} \text{Polyoxyde d'éthylène+} \\ \text{Perchlorate de lithium (1,5M)} \end{array} \left\| \begin{array}{c} \text{Solution} \\ \text{radicalaire} \end{array} \right| \text{Ni}$$

où

$$E \text{ (volt)} = f\left(\left(\log \frac{aLi^s}{aLi^o}\right)\right) \text{ et } aLi^o = 1$$

pour la solution radicalaire décrite le potentiel lu, après agitation et stabilisation ($\simeq$1 hr.) est:

$$E = 0{,}40 \text{ V vs Li}^o.$$

b) La solution radicalaire est constituée de 0,03 M de naphtalène, 0,06 M de tétraméthyl éthane diamine et benzène, en présence d'une source de lithium métallique en excès. Le potentiel lu après agitation et stabilisation est:

$$E = 0{,}31 \text{ V vs Li}^o.$$

c) La solution radicalaire est constituée de 0,005 M de biphényle, 0,01 M de tétraméthyl éthane diamine et de benzène en présence d'une source de lithium métallique en excès. Le potentiel lu après agitation et stabilisation est:

$$E = 0{,}10 \text{ V vs Li}^o.$$

d) La solution radicalaire est constituée de 0,07 M de benzophénone, 1,0 M de tétrahydrofurane et de benzène en présence d'une source de lithium métallique en excès. Le potentiel lu après agitation et stabilisation est:

$$E = 1{,}40 \text{ V vs Li}^o.$$

Il apparaît donc possible de contrôler l'activité du lithium à partir de la nature, des rapports relatifs et des concentrations des éléments constitutifs des solutions radicalaires. Un large domaine d'activité de lithium est accessible ($0 < a_{Li}s < 1{,}5$ V Vs Li°). Le contrôle de l'activité du lithium a des voltages $\leqslant$600 mV vs Li° est particulièrement intéressant pour la synthèse d'alliages à hautes activités de lithium qui lorsque utilisés dans des générateurs électrochimiques produisent des tensions de pile et des densités d'énergie élevées.

Exemple 2

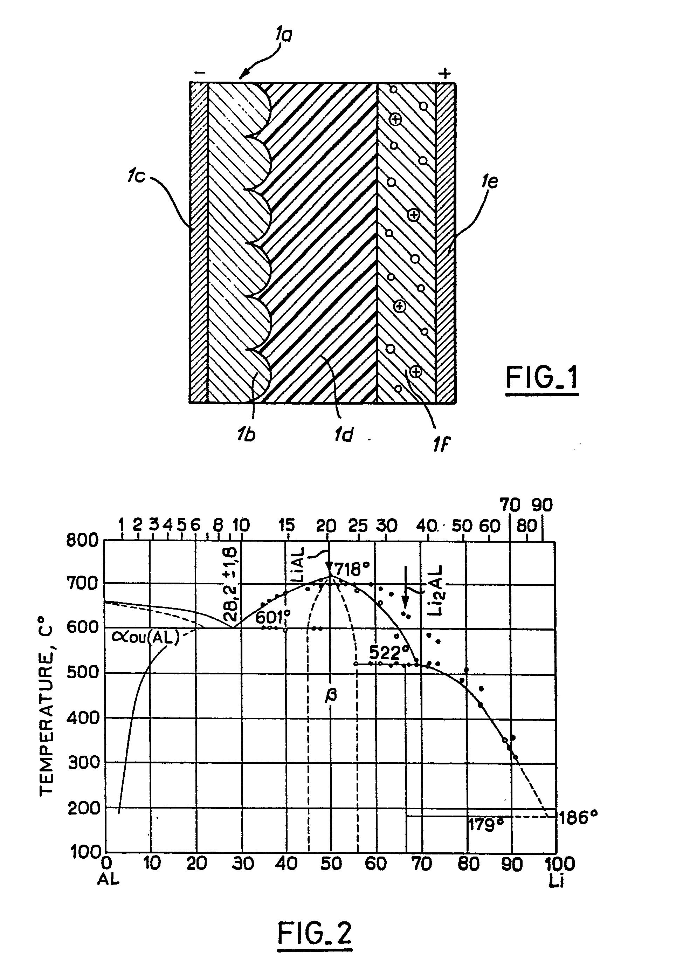

Un premier exemple d'électrode négative et de générateur réalisé selon l'invention est illustrée à la Figure 1 et obtenue de la manière suivante:

Une structure hôte d'aluminium 1a est préparée en déposant électrochimiquement sous forme de dendrites de formes nodulaires de l'aluminium 1b sur un feuillard de cuivre 1c pour une épaisseur totale d'aluminium d'environ 25 µm. Cette structure est ensuite plongée dans une solution organique de benzène de composition $5 \times 10^{-3}$ molaire en naphtalène $1{,}5 \times 10^{-2}$ molaire en tétraméthyl éthane diamine saturée en lithium sous forme radicalaire et en présence d'un excès de lithium métallique de façon à obtenir une activité de lithium de l'ordre de 400 mVvsLi°.

Après environ 8 heures, la réaction de formation de l'alliage est complétée et l'alliage posséde une activité correspondante à celle de la solution radicalaire. Le contrôle de l'activité de la solution radicalaire permet dans ce cas d'éviter une désagrégation de l'alliage d'aluminium qui aurait lieu si la phase riche du diagramme de phase du système Al-Li était formée (voir Figure 2). Cet alliage, qui a conservé la morphologie de l'aluminium de départ et dont la teneur en lithium par cm² correspond à environ 10 Coulombs/cm², est ensuite mis en contact par transfert à 80°C avec un film d'électrolyte polymère 1d qui comprend un copolymère de l'oxyde d'éthylène et d'oxyde de propylène de composition suivant le rapport

$$\frac{OE}{OP} = \frac{95}{5}$$

et ayant une masse moléculaire d'environ 500 000.

L'électrode positive est constituée de particules de $MoO_2$ d'environ 15 µm et de noir d'acétylène lié par le polymère de l'électrolyte dans des rapports volumiques de 0,30/0,10/0,60 et possède une capacité d'insertion de lithium correspondant à environ 3,5 Coulombs/cm².

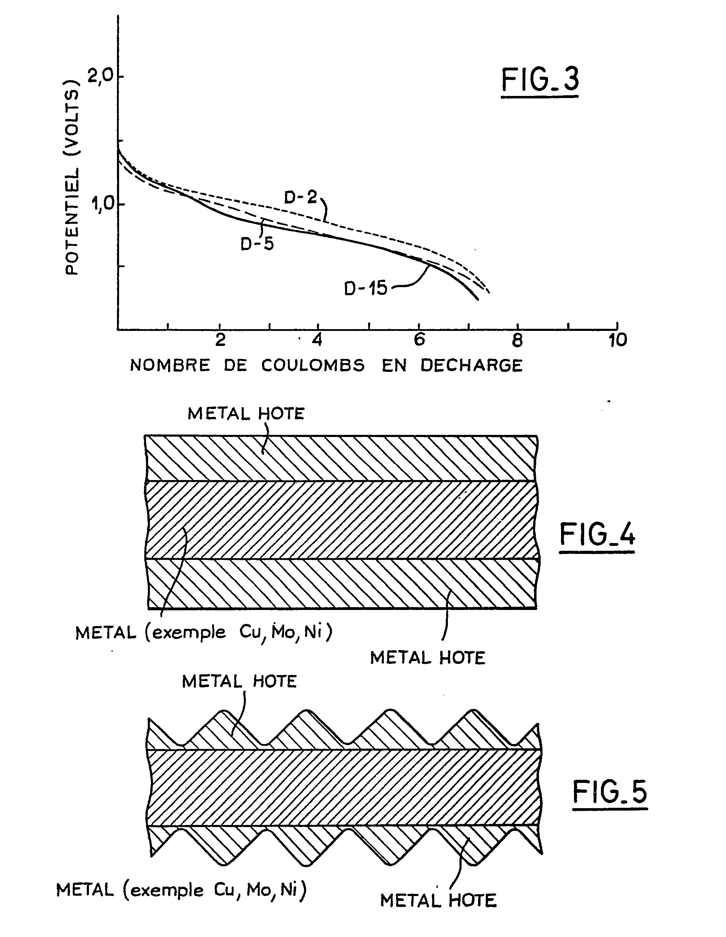

Le rapport 0/4Li entre l'oxygène du métal monomère du polymère et le sel de lithium $LiClO_4$ est d'environ 12/1 pour l'ensemble du générateur et la surface totale du générateur, de 3,9 cm². La Figure 3 illustre bien l'allure des plateaux de décharge obtenus à 27°C et à 60 µA et le maintien de l'allure des plateaux de décharge obtenus à 27°C et à 60 µA et le maintien de la capacité observée en coulombs aux cycles de décharge identifiées D2, D5 et D15.

On constate que la forme dentritique de l'électrode négative permet l'obtention de courants relativement élevés à 27°C par suite de la surface d'échange importante entre l'alliage et l'électrolyte polymère alors que la bonne tenue au cyclage confirme le bon maintien du contact électronique entre les diverses parties de l'alliage et l'absence du phénomène d'isolation électrique de l'alliage par formation de films de passivation.

## EP 0 159 266 B1

### Exemple 3

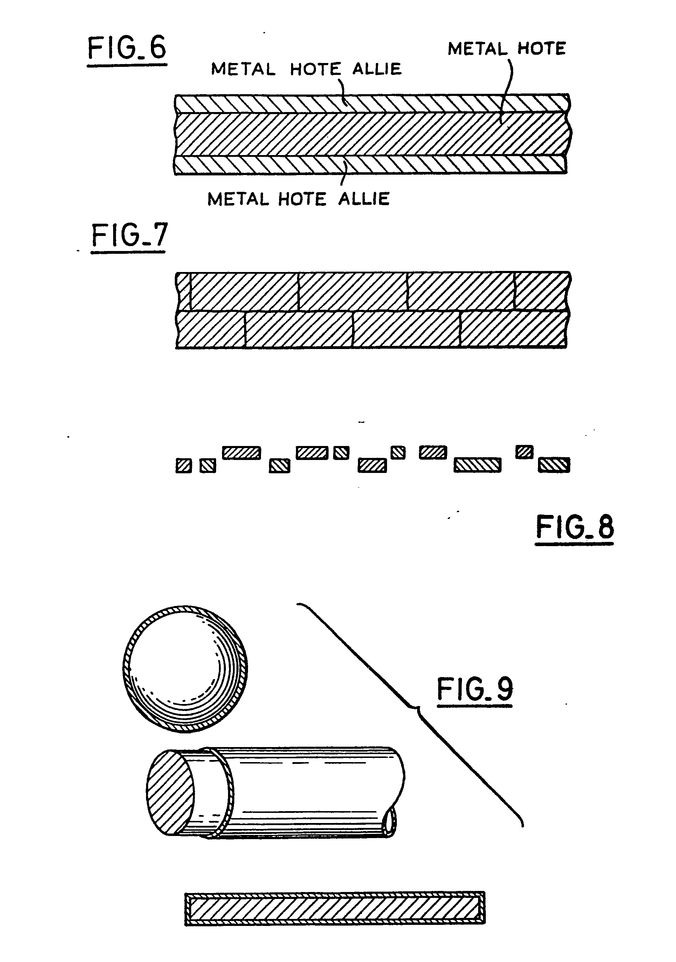

Dans cet exemple l'électrode négative est obtenue à partir d'un feuillard d'aluminium d'environ 300 μm d'épaisseur qui est plongé environ 6 heures dans une solution $1,4 \times 10^{-1}$ molaire en tétraméthyl éthane diamine et $6 \times 10^{-2}$ molaire en naphtalène dans le benzène. Dans ce cas le contrôle de l'activité en lithium dans la solution et du temps de réaction permet la préservation de la forme initiale du feuillard puisque l'activité de la solution ne permet pas la formation de la phase β-riche et que de l'aluminium pur ou de phase α non réagi demeure présent au centre de la structure (Figure 6). La teneur en lithium de l'alliage formé superficiellement dans ces conditions correspond à environ 7 Coulombs/cm².

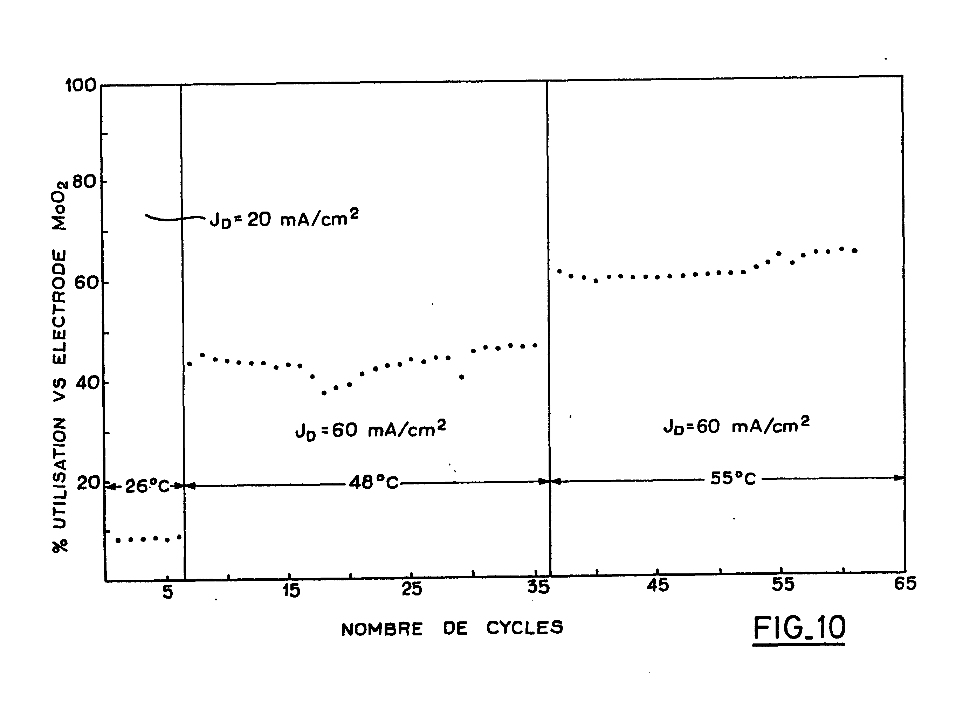

L'électrode est complétée en appliquant sur l'alliage de l'électrolyte polymère dissous dans un solvant tel le benzène et en laissant évaporer. La pile est complétée par un électrolyte copolymère de l'oxyde d'éthylène et de méthyl glycidyl éther

$$\frac{OE}{MGE} = \frac{95}{5}$$

de masse moléculaire d'environ 500.000 et possédant un rapport $0/4Li: \simeq 16/1$, le sel de lithium étant $LiClO_4$ et par une électrode positive et son collecteur d'acier inoxydable composée de $MoO_2$, de noir d'acétylène, de l'électrolyte polymère dans un rapport de 0,40/0,10/0,50 en volume et dont la capacité d'insertion de Li correspond à environ 5 Coulombs/cm². L'épaisseur de l'électrolyte est $\simeq 110$ μm et la surface est de 5,6 cm². Les propriétés de cyclage à 26, 48 et 55°C du générateur sont indiquées à la Figure 10 et apparaissent excellentes sur plus de 60 cycles successifs à des taux variant de C/70 à $\simeq$C/20.

Bien que dans cet exemple l'alliage formé n'est utilisé électrochimiquement que nur une face, l'homme de l'art comprendra que cette technologie se prête aisément à la fabrication d'électrodes bi-faces permettant d'optimiser les densités d'énergie des générateurs et que d'autre part de l'aluminium non-réagi, ou encore l'aluminium présent au centre de la structure peut faciliter la collection de courant et l'assemblage de telles électrodes. De plus, cet exemple montre comment l'électrode ainsi réalisée de façon à permettre la coexistence de l'alliage formé avec une deuxième phase, ici l'aluminium non-réagi, s'avère favorable aux propriétés de cyclage en favorisant thermodynamiquement le contrôle de l'activité du lithium de l'électrolyte près de 380 mVvsLi° ce qui défavorise la formation de la phase β-riche lors de la recharge et assure ainsi l'intégrité physique de l'électrode.

### Exemple 4

Dans cet exemple la structure de départ est un feuillard mince d'aluminium de 25 μm et la solution organique est de composition: $9,0 \times 10^{-2}$ molaire en biphényle et environ 1 molaire en THF dans le benzène. La réaction est poursuivie sur environ 100 heures et l'on observe la transformation du feuillard initial en alliage dont l'épaisseur finale d'environ 40 μm après conversion complète, l'activité en lithium de l'alliage mesurée selon l'exemple 1 est d'environ 380 mVvsLi° sensiblement la même valeur que celle observée pour la solution. Cet exemple montre donc comment le contrôle de l'activité de la solution organique permet la conservation de la forme du feuillard original d'autant que l'activité ne permet pas la formation d'aluminium de phase β. Un générateur réalisé à partir de cet alliage de façon analoque à l'exemple 2, conduit sensiblement aux mêmes performances que celles de la Figure 3.

### Exemple 5

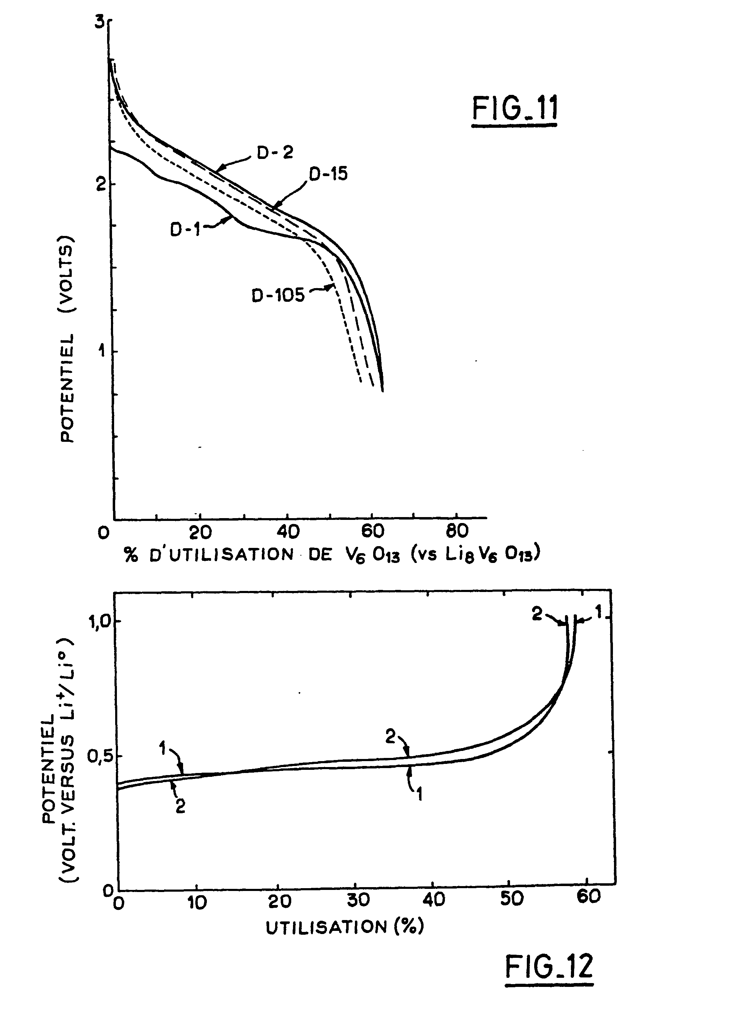

Dans cet exemple la structure de départ est un feuillard d'aluminium d'environ 300 μm qui est mis en contact avec une solution $1,5 \times 10^{-2}$ molaire en tétraméthyl éthane diamine et $6,5 \times 10^{-3}$ molaire en naphtalène durant 12 heures après quoi le lithium est d'abord retiré puis 1 heure plus tard l'alliage est également retiré et lavé. Ce traitement permet de contrôler la quantité d'alliage formé superficiellement et son homogénéité (teneur en lithium de l'alliage correspondant à environ 20 Coulombs/cm²). Le générateur est ensuite assemblé en utilisant un électrolyte à base de polyoxyéthylène de masse moléculaire 5M qui est d'abord fusionné sur l'alliage vers 90°C puis mis en contact sur l'autre face avec une électrode positive composite formée de $V_6O_{13}$ (<38 μm; capacité d'insertion de Li équivalente à environ 2C/cm²), de noir d'acétylène et du polymère de l'électrolyte dans des rapports volumiques de 0,40/0,14/0,45 et de son collecteur d'acier inoxydable. La surface du générateur est de 3,9 cm², le rapport 0/4 Li est de $\simeq 9/1$ pour $LiClO_4$ et les courants de décharge et de charge d'environ 100 μA/cm². Les plateaux de décharge de ce générateur obtenus à 100°C sont illustrés à la Figure 11 pour les tests D1, D2, D15, D105. Sauf pour la première décharge dont la forme est typique des comportements de $V_6O_{13}$ et dont la capacité est plus faible que prévu par suite d'une décharge partielle à l'assemblage les plateaux suivants sont remarquablement stables sur plus de 100 cycles de décharge profonde ($\geqslant 60\%$) et apparaissent contrôlés par l'électrode positive. Cet exemple illustre bien les avantages des électrodes réalisées selon l'invention dans des conditions de température relativement élevées.

### Exemple 6

Soit une solution radicalaire constituée par du lithium métallique en excès, du benzène en excès et des quantités limitées de biphényle et de tétraméthyl éthylène diamine. Les deux derniers constituants sont présents dans des rapports molaires de 3,5 et des concentrations telles que l'activité en lithium de la solution est comprise entre 100 et 200 mVvsLi°.

Un poids connu d'aluminium, sous forme de feuillard de 25 µm d'épaisseur par ≃1 cm² de surface est plongé dans la solution.

La réaction a lieu à température ambiante, pendant environ 20 heures. Le produit obtenu, lorsque la réaction est complétée est une poudre d'un alliage de lithium et d'aluminium composée de grains de forme cubique dont les dimensions moyennes sont approximativement 20 µm×10 µm×10 µm. Cette poudre est filtrée de la solution séchée puis pesée. Le gain de poids dû à la formation de l'alliage par rapport au poids initial de l'aluminium nous permet d'évaluer la stoechiométrie de l'alliage à environ $Li_{0,5}Al_{0,5}$.

L'activité chimique en lithium de l'alliage mesurée selon la méthode décrite à l'exemple 1 est : 188 mVvsLi°, ce qui correspond à l'activité en lithium de la phase β (Figure 2) à la stoechiométrie de $Li_{0,56}Al_{0,44}$ selon le diagramme activité composition publié par T. R. Jow ete C. C. Liang (Journal of the Electrochemical *Society 129*, 7, p(1982) 1429—1434). L'obtention d'alliage à hautes activités en lithium, phase β riche, s'accompagne d'une augmentation de volume qui entraîne pour le cas décrit ici, une désagrégation de feuillard initial.

La détermination de la stoechiométrie de l'alliage par la mesure de l'activité chimique du lithium est en accord avec la détermination gravimétrique de la stoechiométrie de ce même alliage synthétisé.

Des poudres de granulométries prédéterminées par tamisage, diamètre des particules <38 µm, de Zn, Si et Ag sont plongées successivement dans la solution radicalaire. Après environ 24 heures de temps de réaction, les poudres produites sont filtrées de la solution, séchées puis pesées. On détermine les stoechiométries des alliages synthétisés qui sont: $Li_{0,55}Ag_{0,45}$, $Li_{0,51}Zn_{0,49}$ et $Li_{0,76}Si_{0,24}$. Par la même technique que précédemment on mesure l'activité chimique de ces alliages et on obtient: 114 mV, 180 mV et 144 mV respectivement.

Exemple 7

Les poudres des alliages $Li_{0,56}Al_{0,44}$, $Li_{0,55}Ag_{0,45}$ et $Li_{0,51}Zn_{0,49}$ décrites à l'exemple 6, sont utilisées pour réaliser des électrodes négatives composites selon la procédure décrite dans le brevet canadien publié CA—A—1173900.

Ces électrodes négatives seront après leur élaboration assemblées avec un électrolyte polymère et une électrode positive de façon à former des générateurs électrochimiques complets. Ici l'électrolyte polymère est constitué d'une membrane élastomérique d'épaisseur comprise entre 75 µm et 150 µm formée d'un complexe de polyéther et de perchlorate de lithium (POE-LiClO₄) dans un rapport O/Li=8. L'électrode positive est soit un feuillard d'environ 25 µm d'épaisseur d'aluminium métallique ou un matériau composite à base de $MoO_2$ (≃40%V), de noir de Shawinigan (≃10%V) et de complexe polyether-LiClO₄ ayant un O/Li de 8.

a) 3 g de la poudre de l'alliage $Li_{0,51}Al_{0,49}$ décrit à l'exemple 6, soit 67% en poids, et 1,5 g de noir de Shawinigan soit 33% en poids ont été intimement mélangés. De ce mélange 1,46 g a été prélevé et ajouté à 0,6 g de polyoxyde d'éthylène en solution dans un solvant organique, puis la suspension a été homogénéisée avant d'être épandue en film mince sur un support d'acier inoxydable. De cette anode on prélève 4 cm³;

b) on opère comme en (a) avec $Li_{0,5}Al_{0,5}$ pyrométallurgique commercial (KBI)

Deux générateurs ont été assemblés selon la procédure décrite, et les anodes déchargées à 100°C et 125 µA cm⁻². Dans les deux cas, l'utilisation initiale du lithium des alliages est près de 58% à 60% des capacités théoriques.

Le comportement de ces deux anodes est illustré et comparé à la Figure 12, où la courbe 1 est obtenue pour l'alliage de lithium aluminium décrit à l'exemple 6 et la courbe 2 est obtenue pour l'alliage de lithium aluminium commercial. Les potentiels des anodes sont mesurés par rapport à une électrode de référence au lithium,

c) Une anode composite contenant dans les proportions suivantes, les divers constituants a été réalisée; 64% en poids de $Li_{0,51}Zn_{0,45}$, 9% en poids de noir de Shawinigan et 27% en poids de polyoxyde d'éthylène sous forme d'une solution 6% en poids dans le benzène. Après homogénisation, on obtient une suspension qui est épandue sur un feuillard d'acier inoxydable mince et qui après évaporation du benzène laisse un film d'environ 25 µm. On en prélève 4 cm². Un générateur électrochimique est assemblé, l'électrode positive est ici à base de $MoO_2$, tel que décrit précédemment.

L'anode est déchargée à 50°C et à 60 µA. Pour ces conditions 35% du lithium présent dans l'alliage est utilisé pour une tension de pile près de 1,3 à 1,4 volt.

d) Une anode composite contenant 74% en poids de $Li_{0,55}Ag_{0,45}$ et 26% en poids de polyoxyde d'éthylène a été élaborée de la façon décrite en (c). Un générateur électrochimique est assemblé, l'électrode positive est ici aussi à base de $MoO_2$.

L'anode est déchargée à 50°C et à 60 µA. Pour ces conditions 42% du lithium présent dans l'alliage est utilisé pour une tension de pile près de 1,5 volt.

Exemple 8

La solution organique de l'exemple 6 possédant une activité inférieure à 200 mV est utilisé en présence d'une structure d'aluminium contenant un faible taux d'intermétalliques de $Al_3Ni$ sous forme de fibres présentes dans l'aluminium. Dans ce cas malgré une activité en lithium élevée, la formation de LiAl de phase β riche n'entraîne pas la désagrégation de la structure grâce à la présence des fibres. Un essai en générateur analogue à celui de l'exemple 2 conduit à des performances équivalentes sauf pour le voltage de première décharge qui est plus élevé d'environ 175 mV.

Il va de soi que ces exemples sont destinés à illustrer les avantages de la présente invention mais ne sont pas limitatifs en ce que concerne le choix des structures de départ, des compositions des solutions organiques, des éléments formant l'alliage et des électrolytes utilisés qui peuvent à titre d'exemples être dans certaines conditions, des liquides organiques ou des sels fondus fonctionnant à basses températures.

## Revendications

1. Méthode de préparation d'alliages métalliques contenant un métal alcalin ou alcalino-terreux ainsi qu'un métal hôte, caractérisée en ce que l'on prépare, d'une part, une solution organique active dudit métal alcalin ou alcalino-terreux sous forme radicalaire de même qu'une source dudit métal alcalin ou alcalino-terreux et met en contact ladite solution et ladite source l'une avec l'autre, on prépare, d'autre part, une structure métallique renfermant ledit métal hôte, puis on met en présence la structure métallique avec la solution organique, tout en maintenant cette dernière en contact avec la source de métal alcalin ou alcalino-terreux et en gardant la structure métallique séparée de ladite source de métal alcalin ou alcalino-terreux, de manière à former un alliage du métal hôte et du métal alcalin ou alcalino-terreux avec la structure métallique et jusqu'à ce que l'alliage formé possède une activité en métal alcalin ou alcalino-terreux correspondant à celle de la solution organique, ladite solution organique servant alors d'agent de transfert du métal alcalin ou alcalino-terreux vers la structure métallique hôte.

2. Méthode selon la revendication 1, caractérisée en ce que la préparation s'effectue à température ambiante.

3. Méthode selon la revendication 1, caractérisée en ce que le métal alcalin ou alcalino-terreux est constitué par du lithium Li°.

4. Méthode selon la revendication 1, caractérisée en ce que la solution organique renferme le lithium métallique, sous forme radicalaire.

5. Méthode selon la revendication 1, caractérisée en ce que le métal hôte forme des alliages, des intermétalliques, ou des solutions solides avec des métaux alcalins ou alcalino-terreux.

6. Méthode selon la revendication 1, caractérisée en ce que la solution organique comprend un mélange de liquides incluant au moins un solvant aprotique polaire compatible avec le métal alcalin ou alcalino-terreux et solvatant des ions dudit métal alcalin ou alcalino-terreux, un composé à doubles liaisons conjuguées pouvant délocaliser les électrons dudit métal alcalin ou alcalino-terreux et un diluant organique liquide, compatible avec le métal alcalin ou alcalino-terreux, la dite solution organique étant capable de contrôler l'activité dudit métal alcalin ou alcalino-terreux.

7. Méthode selon la revendication 6, caractérisée en ce que la solution organique est capable de contrôler l'activité dudit métal alcalin ou alcalino-terreux à des valeurs inférieures à 600 mVvsLi°.

8. Méthode selon la revendication 6, caractérisée en ce que le solvant aprotique polaire est choisi dans le groupe constitué par les solvants éthérés et les solvants à base d'amines substituées.

9. Méthode selon la revendication 8, caractérisée en ce que le solvant aprotique polaire est choisi dans le groupe constitué par le THF, le dioxolane, les glymes et les éthers couronnes.

10. Méthode selon la revendication 8, caractérisée en ce que le solvant aprotique polaire est choisi dans le groupe constitué par la N,N,N',N'-tétraméthyl 1,2-éthane diamine, la N,N,N',N',-tétramethyl 1,3-propane diamine, et la N,N,N'N'',N''pentaméthyl diéthylène triamine.

11. Méthode selon la revendication 6, caractérisée en ce que le composé à doubles liaisons conjuguées est choisi dans le groupe constitué par le naphtalène, le biphényle, l'anthracène et la benzophénone.

12. Méthode selon la revendication 6, caractérisée en ce que le diluant organique est choisi dans le groupe constitué par le benzène, le toluène, les alcanes et un mélange de ces derniers.

13. Méthode selon la revendication 6, caractérisée en ce que les rapports molaires des constituants de la solution organique sont les suivants:

| | |
|---|---|
| solvant aprotique polaire: | $10^{-5}$ à <1 |
| composé à doubles liaisons conjuguées: | $10^{-5}$ à 0,2 |
| diluant organique: | <1 |

14. Méthode selon la revendication 13, caractérisée en ce que les rapports molaires sont les suivants:

| | |
|---|---|
| solvant aprotique polaire: | $10^{-3}$ à 0,2 |
| composé à doubles liaisons conjuguées: | $10^{-4}$ à 0,1 |
| diluant organique: | <1 |

15. Méthode selon la revendication 13, caractérisée en ce que la solution organique est constituée de THF ou de N,N,N',N',-tétraméthyl 1,2-éthane diamine, de naphtalène ou de biphényle et de benzène, les rapports molaires étant les suivants:

THF ou N,N,N',N',-tétraméthyl
1,2-éthane diamine:        environ $9 \times 10^{-2}$
biphényle ou naphtalène:     environ $7 \times 10^{-2}$
benzène:                    environ 0,84.

16. Méthode selon la revendication 1, caractérisée en ce que la solution organique est à base de naphtalène ou de biphényle.

17. Méthode selon la revendication 1, caractérisée en ce que la solution organique est à base de THF et de N,N,N',N',-tétraméthyl-1,2-éthane diamine.

18. Méthode selon la revendication 6, caractérisée en ce que la solution organique est riche en diluant inerte mais pauvre en composés aromatiques et en solvants aprotiques polaires compatibles avec le lithium.

19. Méthode selon la revendication 18, caractérisée en ce que le diluant inerte est constitué par le benzène.

20. Méthode selon la revendication 1, caractérisée en ce que le métal hôte est choisi dans le groupe constitué par l'aluminium, le magnésium, le silicium, le zinc, le bore, le mercure, l'argent et leurs alliages.

21. Méthode selon la revendication 20, caractérisée en ce que le métal hôte est constitué par l'aluminium.

22. Méthode selon la revendication 1, caractérisée en ce que la solution organique est à base de benzène et contient du naphtalène ou du biphényle, de la N,N,N',N',-tétraméthyl-1,2-éthane diamine ou du THF, et elle est saturée en lithium sous forme radicalaire et renferme de plus un excès de lithium métallique.

23. Méthode selon la revendication 1, caractérisée en ce que la solution organique est à base de benzène et contient du naphtalène ou du biphényle, de la N,N,N',N',-tétraméthyl-1,2-éthane diamine ou du THF, et elle est saturée en lithium sous forme radicalaire et renferme une quantité limitée de lithium métallique de façon à contrôler la proportion d'alliage formé.

24. Méthode selon la revendication 4, caractérisée en ce que la solution organique renfermant du lithium radicalaire est en contact avec une source de lithium.

25. Méthode selon la revendication 1, caractérisée en ce que la structure métallique renfermant ledit métal hôte est constituée par un feuillard métallique comprenant une couche plane de métal hôte.

26. Méthode selon la revendication 25, caractérisée en ce que le feuillard métallique est choisi parmi le cuivre, le molybdène et le nickel.

27. Méthode selon la revendication 26, caractérisée en ce que la couche plane de métal hôte comprend l'aluminium.

28. Méthode selon l'une des revendications 25 à 27, caractérisée en ce que l'épaisseur du feuillard métallique varie entre environ 1 µm et 25 µm, tandis que l'épaisseur de la couche de métal hôte varie entre environ 5 µm et 50 µm et, de préférence, se situe à environ 25 µm.

29. Méthode selon la revendication 1, caractérisée en ce que la structure métallique renfermant ledit métal hôte est constituée par un feuillard métallique comprenant une couche de métal hôte qui présente un aspect dendritique.

30. Méthode selon la revendication 29, caractérisée en ce que le feuillard métallique est choisi parmi le cuivre, le molybdène et le nickel.

31. Méthode selon la revendication 30, caractérisée en ce que la couche dendritique de métal hôte est en aluminium.

32. Méthode selon l'une des revendications 29 à 31, caractérisée en ce que l'épaisseur totale de la couche dendritique de métal hôte varie entre environ 5 µm et 50 µm.

33. Méthode selon la revendication 1, caractérisée en ce que la structure métallique renfermant ledit métal hôte est essentiellement constituée par un feuillard du métal hôte.

34. Méthode selon la revendication 33, caractérisée en ce que la structure métallique est constituée par un feuillard d'aluminium.

35. Méthode selon la revendication 34, caractérisée en ce que le feuillard d'aluminium a une épaisseur variant entre 1 µm et 200 µm, et qu'on laisse la réaction se poursuivre de façon à obtenir un feuillard entièrement convertie en alliage.

36. Méthode selon la revendication 34, caractérisée en ce que le feuillard d'aluminium a une épaisseur variant entre environ 5 µm et 500 µm, et qu'on laisse la réaction se poursuivre de façon à ce que le feuillard présente une ou deux faces alliées et une zone non réagie, et à maintenir une co-existence entre l'alliage formé et la structure hôte non réagie.

37. Méthode selon la revendication 36, caractérisée en ce que le feuillard d'aluminium a une épaisseur variant entre environ 50 µm et 300 µm.

38. Méthode selon la revendication 35, caractérisée en ce que le feuillard complètement allié est dèsagrégé en particules d'alliage.

39. Méthode selon la revendication 1, caractérisée en ce que la structure hôte est constituée par un mélange de sphères, fibres ou paillettes du métal hôte que l'on met en contact avec la solution organique pour former des sphères, fibres ou paillettes d'alliages.

40. Méthode selon la revendication 39, caractérisée en ce que les sphères, fibres ou paillettes de métal

11

hôte ne dépassent pas 50 µm pour une de leurs dimensions et que l'on forme des films d'alliages sur ces particules.

41. Méthode selon la revendication 39, caractérisée en ce que la structure hôte est constituée de particules de Al, Mg, Si, Zn en forme de sphères, de paillettes, ou de fibres de granulométrie préalablement choisies de façon à former des alliages de lithium aux stoechiométries voisines de LiAl, $Li_{0,9}Mg$, $Li_{3,5}Si$, LiZn à partir d'une solution radicalaire de ce métal.

42. Méthode selon la revendication 3, caractérisée en ce que la solution organique est à base de naphtalène dans laquelle l'activité du lithium radicalaire se situe entre environ 200 et environ 400 mVvsLi°.

43. Méthode selon la revendication 3, caractérisée en ce que la solution organique est à base de biphényle dans laquelle l'activité du lithium radicalaire se situe entre environ 200 et environ 80 mVvsLi°.

44. Application d'un alliage métallique contenant un métal alcalin ou alcalino-terreux et un métal hôte et obtenu par la méthode selon l'une des revendications 1 à 43, à la production d'électrodes métalliques alliées par mise en contact dudit alliage avec un électrolyte polymère.

45. Application selon la revendication 44, caractérisée en ce que l'électrolyte polymère est à base d'au moins un polyéther.

46. Application selon la revendication 44, caractérisée en ce que la mise en contact de l'alliage et de l'électrolyte polymère s'effectue de façon à définir dans l'électrode des zones où l'alliage n'est pas pénétré par ledit polymère.

47. Application selon la revendication 44 ou 45, caractérisée en ce que l'électrolyte est mis en contact avec l'alliage, à l'état fondu.

48. Application selon la revendication 44 ou 45, caractérisée en ce que l'électrolyte est mis en contact avec l'alliage à l'état de solution, ladite solution étant compatible avec l'alliage.

49. Application selon la revendication 44, caractérisée en ce que l'électrode métallique obtenue possède une morphologie prédéterminée, et que pour ce faire, la structure métallique utilisée pour former l'alliage est constituée de façon à qu'elle soit un précurseur de la morphologie finale de ladite électrode qui sera favorable à la réalisation d'électrodes en films minces.

50. Electrode métallique alliée constituée d'un alliage d'un métal hôte et d'un métal alcalin ou alcalino-terreux, ledit alliage étant obtenu par la méthode selon l'une des revendications 1 à 43, et d'un électrolyte polymère en contact avec ledit alliage.

51. Electrode selon la revendication 50, caractérisée en ce que l'électrolyte polymère est à base d'au moins un polyéther.

## Patentansprüche

1. Verfahren zur Herstellung von Metallegierungen, die ein Alkali- oder Erdalkalimetall sowie ein Empfangsmetall enthalten, dadurch gekennzeichnet, daß man einerseits eine aktive organische Lösung des Alkali- oder Erdalkalimetalls in Radikalform sowie eine Quelle des Alkali- oder Erdalkalimetalls herstellt und diese Lösung mit dieser Quelle kontaktiert und andererseits eine Metallstruktur herstellt, die das Empfangsmetall enthält, und dann die Metallstruktur mit der organischen Lösung in Berührung bringt, wobei man den Kontakt zwischen dieser und der Quelle des Alkali- oder Erdalkalimetalls weiterhin aufrechterhält und die Metallstruktur von der Quelle des Alkali- oder Erdalkalimetalls getrennt hält, um auf diese Weise eine Legierung des Empfangsmetalls und des Alkali- und Erdalkalimetalls mit der Metallstruktur zu bilden, bis die gebildete Legierung eine Aktivität an Alkali- oder Erdalkalimetall aufweist, die derjenigen der organischen Lösung entspricht, wobei die organische Lösung als Mittel für den Transfer des Alkali- oder Erdalkalimetalls zur Struktur des Empfangsmetalls dient.

2. Verfahren nach Anspruch 1, dadurch gekennzeichnet, daß die Herstellung bei Umgebungstemperatur durchgeführt wird.

3. Verfahren nach Anspruch 1, dadurch gekennzeichnet, daß das Alkali- oder Erdalkalimetall durch Lithium (Li°) gebildet ist.

4. Verfahren nach Anspruch 1, dadurch gekennzeichnet, daß die organische Lösung metallisches Lithium in Radikalform enthält.

5. Verfahren nach Anspruch 1, dadurch gekennzeichnet, daß das Empfangsmetall Legierungen, intermetallische Verbindungen oder feste Lösungen mit Alkali- oder Erdalkalimetallen bildet.

6. Verfahren nach Anspruch 1, dadurch gekennzeichnet, daß die organische Lösung ein Gemisch aus Flüssigkeiten darstellt, das wenigstens ein aprotisches polares Lösungsmittel, das mit dem Alkali- oder Erdalkalimetall verträglich ist und die Ionen des Alkali- oder Erdalkalimetalls solvatisiert, eine Verbindung mit konjugierten Doppelbindungen, welche die Elektronen des Alkali- oder Erdalkalimetalls zu delokalisieren vermögen, und ein flüssiges organisches Verdünnungsmittel enthält, das mit dem Alkali- oder Erdalkalimetall verträglich ist, wobei die organische Lösung die Aktivität des Alkali- oder Erdalkalimetalls zu steuern vermag.

7. Verfahren nach Anspruch 6, dadurch gekennzeichnet, daß die organische Lösung die Aktivität des Alkali- oder Erdalkalimetalls auf Werte unter 600 mVvsLi° einzustellen vermag.

8. Verfahren nach Anspruch 6, dadurch gekennzeichnet, daß das aprotische polare Lösungsmittel ausgewählt ist aus einer Gruppe, bestehend aus veretherten Lösungsmitteln und aus Lösungsmitteln auf der Basis von substituierten Aminen.

9. Verfahren nach Anspruch 8, dadurch gekennzeichnet, daß das aprotische polare Lösungsmittel ausgewählt ist aus der Gruppe, bestehend aus THF, Dioxolan, Glymen und Kronenethern.

10. Verfahren nach Anspruch 8, dadurch gekennzeichnet, daß das aprotische polare Lösungsmittel ausgewählt ist aus der Gruppe, bestehend aus N,N,N',N'-Tetramethyl-1,2-ethandiamin, N,N,N',N'-Tetramethyl-1,3-propandiamin und N,N,N'N'',N''-Pentamethyldiethylentriamin.

11. Verfahren nach Anspruch 6, dadurch gekennzeichnet, daß die Verbindung mit konjugierten Doppelbindungen ausgewählt ist aus der Gruppe, bestehend aus Naphthalin, Biphenyl, Anthracen und Benzophenon.

12. Verfahren nach Anspruch 6, dadurch gekennzeichnet, daß das organische Verdünnungsmittel ausgewählt ist aus der Gruppe, bestehend aus Benzol, Toluol, Alkanen und einem Gemisch dieser Verbindungen.

13. Verfahren nach Anspruch 6, dadurch gekennzeichnet, daß die Molverhältnisse der Komponenten der organischen Lösung wie folgt gewählt sind:

| | |
|---|---|
| Aprotisches polares Lösungsmittel | $10^{-5}$ bis $<1$ |
| Verbindung mit konjugierten Doppelbindungen | $10^{-5}$ bis 0,2 |
| organsches verdünnungsmittel | $<1$ |

14. Verfahren nach Anspruch 13, dadurch gekennzeichnet, daß die Molverhältnisse wie folgt gewählt sind:

| | |
|---|---|
| Aprotisches polares Lösungsmittel | $10^{-3}$ bis 0,2 |
| Verbindung mit konjugierten Doppelbindungen | $10^{-4}$ bis 0,1 |
| organisches Verdünnungsmittel | $<1$ |

15. Verfahren nach Anspruch 13, dadurch gekennzeichnet, daß die organische Lösung gebildet ist aus THF oder N,N,N',N'-Tetramethyl-1,2-ethandiamin, Naphthalin oder Biphenyl und Benzol, wobei die Molverhältnisse wie folgt gewählt sind:

| | |
|---|---|
| THF oder N,N,N',N'-Tetramethyl-1,2-ethandiamin | ca. $9\times10^{-2}$ |
| Biphenyl oder Naphthalin | ca. $7\times10^{-2}$ |
| Benzol | ca. 0,84. |

16. Verfahren nach Anspruch 1, dadurch gekennzeichnet, daß die organische Lösung auf Naphthalin- oder Biphenylbasis beruht.

17. Verfahren nach Anspruch 1, dadurch gekennzeichnet, daß die organische Lösung auf der Basis von THF und N,N,N',N'-Tetramethyl-1,2-ethandiamin beruht.

18. Verfahren nach Anspruch 6, dadurch gekennzeichnet, daß die organische Lösung reich ist an einem inerten Verdünnungsmittel, aber arm an aromatischen Verbindungen und aprotischen polaren Lösungsmitteln, die mit Lithium verträglich sind.

19. Verfahren nach Anspruch 18, dadurch gekennzeichnet, daß das inerte Verdünnungsmittel aus Benzol gebildet ist.

20. Verfahren nach Anspruch 1, dadurch gekennzeichnet, daß das Empfangsmetall ausgewählt ist aus der Gruppe, bestehend aus Aluminium, Magnesium, Silizium, Zink, Bor, Quecksilber, Silber und ihren Legierungen.

21. Verfahren nach Anspruch 20, dadurch gekennzeichnet, daß das Empfangsmetall gebildet ist aus Aluminium.

22. Verfahren nach Anspruch 1, dadurch gekennzeichnet, daß die organische Lösung auf Benzolbasis beruht und Naphthalin oder Biphenyl, N,N,N',N'-Tetramethyl-1,2-ethandiamin oder THF enthält und mit Lithium in Radikalform gesättigt ist und außerdem einen Überschuß an metallischem Lithium enthält.

23. Verfahren nach Anspruch 1, dadurch gekennzeichnet, daß die organische Lösung auf Benzolbasis beruht und Naphthalin oder Biphenyl, N,N,N',N'-Tetramethyl-1,2-ethandiamin oder THF enthält und mit Lithium in Radikalform gesättigt ist und eine begrenzte Menge an metallischem Lithium enthält, welche die Steuerung der Menge an gebildeter Legierung ermöglicht.

24. Verfahren nach Anspruch 4, dadurch gekennzeichnet, daß die organische Lösung, die Lithium in Radikalform enthält, mit einer Lithiumquelle in Kontakt gebracht wird.

25. Verfahren nach Anspruch 1, dadurch gekennzeichnet, daß die Metallstruktur, welche das Empfangsmetall enthält, gebildet ist aus einem Metallband, das eine flache Schicht des Empfangsmetalls enthält.

26. Verfahren nach Anspruch 25, dadurch gekennzeichnet, daß das Metallband ausgewählt ist unter Kupfer, Molybdän und Nickel.

27. Verfahren nach Anspruch 26, dadurch gekennzeichnet, daß die flache Schicht des Empfangsmetalls Aluminium enthält.

13

28. Verfahren nach einem der Ansprüche 25 bis 27, dadurch gekennzeichnet, daß die Dicke des Metallbandes zwischen ca. 1 und 25 µm schwankt, während die Dicke der Schicht des Empfangsmetalls zwischen ca. 5 und 50 µm schwankt und vorzugsweise ca. 25 µm beträgt.

29. Verfahren nach Anspruch 1, dadurch gekennzeichnet, daß die Metallstruktur, welche das Empfangsmetall enthält, gebildet ist aus einem Metallband, das eine Schicht des Empfangsmetalls umfaßt, die dendritisches Aussehen hat.

30. Verfahren nach Anspruch 29, dadurch gekennzeichnet, daß das Metallband ausgewählt ist unter Kupfer, Molybdän und Nickel.

31. Verfahren nach Anspruch 30, dadurch gekennzeichnet, daß die dendritische Schicht des Empfangsmetalls Aluminium ist.

32. Verfahren nach einem der Ansprüche 29 bis 31, dadurch gekennzeichnet, daß die Gesamtdicke der dendritischen Schicht des Empfangsmetalls zwischen ca. 5 und 50 µm schwankt.

33. Verfahren nach Anspruch 1, dadurch gekennzeichnet, daß die Metallstruktur, die das Empfangsmetall enthält, im wesentlichen aus einem Band des Empfangsmetalls gebildet ist.

34. Verfahren nach Anspruch 33, dadurch gekennzeichnet, daß die Metallstruktur aus einem Aluminiumband gebildet ist.

35. Verfahren nach Anspruch 34, dadurch gekennzeichnet, daß das Aluminiumband eine Dicke zwischen 1 µm und 200 µm aufweist und daß man solange reagieren läßt, bis man zu einem Band gelangt, das zur Gänze in eine Legierung umgewandelt ist.

36. Verfahren nach Anspruch 34, dadurch gekennzeichnet, daß das Aluminiumband eine Dicke zwischen ca. 5 µm und 500 µm aufweist und daß man solange reagieren läßt, bis das Band eine oder zwei legierte Flächen und eine nichtumgesetzt Zone aufweist und man ein Nebeneinander von gebildeter Legierung und nichtumgesetzter Empfangsmetallstruktur aufrechterhält.

37. Verfahren nach Anspruch 36, dadurch gekennzeichnet, daß das Aluminiumband eine Dicke aufweist, die zwischen ca. 50 µm und 300 µm schwankt.

38. Verfahren nach Anspruch 35, dadurch gekennzeichnet, daß das vollständig legierte Band in einzelne Legierungsteilchen aufgelöst ist.

39. Verfahren nach Anspruch 1, dadurch gekennzeichnet, daß die Empfangsstruktur gebildet ist aus einem Gemisch von Kügelchen, Fasern oder Plättchen des Empfangsmetalls, das man mit der organischen Lösung zur Bildung von Legierungskügelchen, fasern oder -plättchen kontaktiert.

40. Verfahren nach Anspruch 39, dadurch gekennzeichnet, daß die Kügelchen, Fasern oder Plättchen des Empfangsmetalls in einer ihrer Abmessungen nicht größer als 50 µm sind und daß man auf diesen Teilchen Legierungsfolien bildet.

41. Verfahren nach Anspruch 39, dadurch gekennzeichnet, daß die Empfangstruktur gebildet ist aus Teilchen von Al, Mg, Si, Zn in Form von Kügelchen, Plättchen oder Fasern mit einer Korngrößenzusammensetzung, die vorgängig so gewählt wurde, daß Lithiumlegierungen mit ähnlicher Stöchiometrie aus $LiAl$, $Li_{0,9}Mg$, $Li_{3,5}Si$, $LiZn$, ausgehend von einer Radikallösung dieses Metalls gebildet werden.

42. Verfahren nach Anspruch 3, dadurch gekennzeichnet, daß die organische Lösung auf Naphthalinbasis beruht, wobei die Aktivität an Lithiumradikalen in der Lösung zwischen ca. 200 und ca. 400 mVvsLi° liegt.

43. Verfahren nach Anspruch 3, dadurch gekennzeichnet, daß die organische Lösung auf Biephenylbasis beruht, wobei die Aktivität an Lithiumradikalen in der Lösung zwischen ca. 200 und ca. 80 mVvsLi° liegt.

44. Verwendung einer Metallegierung, die ein Alkali- oder Erdalkalimetall und ein Empfangsmetall enthält, und die erhalten wurde nach dem Verfahren nach einem der Ansprüche 1 bis 43, für die Herstellung von legierten Metallelektroden durch Kontaktierung dieser Legierung mit einem Polymerelektrolyten.

45. Verwendung nach Anspruch 44, dadurch gekennzeichnet, daß der Polymerelektrolyt auf der Basis wenigstens eines Polyethers beruht.

46. Verwendung nach Anspruch 44, dadurch gekennzeichnet, daß die Kontaktierung der Legierung mit dem Polymerelektrolyten so durchgeführt wird, daß in der Elektrode Zonen festgelegt werden, in denen die Legierung vom Polymer nicht durchdrungen wird.

47. Verwendung nach Anspruch 44 oder 45, dadurch gekennzeichnet, daß der Elektrolyt mit der Legierung im geschmolzenen Zustand kontaktiert wird.

48. Verwendung nach Anspruch 44 oder 45, dadurch gekennzeichnet, daß der Elektrolyt mit der Legierung im gelösten Zustand kontaktiert wird, wobei die Lösung mit der Legierung verträglich ist.

49. Verwendung nach Anspruch 44, dadurch gekennzeichnet, daß die erhaltene Metallelektrode eine vorgegebene Morphologie aufweist und daß zu diesem Zweck die für die Bildung der Legierung verwendete Metallstruktur so geartet ist, daß sie einen Vorläufer der Endmorphologie der Elektrode darstellt, die für die Herstellung von Elektroden in Form dünner Folien geeignet ist.

50. Legierte Metallelektrode, bestehend aus einer Legierung eines Empfangsmetalls und eines Alkali- oder Erdalkalimetalls, wobei die Legierung erhalten wurde nach dem Verfahren nach einem der Ansprüche 1 bis 43, und einem Polymerelektrolyten in Kontakt mit der Legierung.

51. Elektrode nach Anspruch 50, dadurch gekennzeichnet, daß der Polymerelektrolyt auf der Basis wenigstens eines Polyethers beruht.

## Claims

1. Method for preparing metal alloys containing an alkaline or alkaline earth metal as well as a host metal, characterised in that, on the one hand, an active organic solution of the said alkaline or alkaline earth metal is prepared in a radical form, as is a source of the said alkaline or alkaline earth metal, and the said solution and the said source are placed in contact with one another; and on the other hand, a metal structure containing the said host metal is prepared, then the metal structure is brought into contact with the organic solution whilst the latter is kept in contact with the alkaline or alkaline earth metal source and the metal structure is kept separate from the said alkaline or alkaline earth metal source, in such a way that an alloy of the host metal and the alkaline or alkaline earth metal is formed with the metal structure and until the alloy formed has a content of alkaline or alkaline earth metal corresponding to that of the organic solution, the said organic solution acting as an agent for transferring the alkaline or alkaline earth metal to the host metal structure.

2. Method according to Claim 1, characterised in that the preparation is performed at ambient temperature.

3. Method according to Claim 1, characterised in that the alkaline or alkaline earth metal consists of $Li^\circ$ lithium.

4. Method according to Claim 1, characterised in that the organic solution comprises metallic lithium in the radical form.

5. Method according to Claim 1, characterised in that the host metal forms alloys, inter-metallic compositions or solid solutions with the alkaline or alkaline earth metals.

6. Method according to Claim 1, characterised in that the organic solution comprises a mixture of liquids including at least one polar aprotic solvent compatible with the alkaline or alkaline earth metal and solvating the ions of the said alkaline or alkaline earth metal, a compound containing conjugated double bonds and capable of delocalising the electrons of the said alkaline or alkaline earth metal and a liquid organic diluent compatible with the alkaline or alkaline earth metal, the said organic solution being capable of controlling the activity of the said alkaline or alkaline earth metal.

7. Method according to Claim 6, characterised in that the organic solution is capable of controlling the activity of the said alkaline or alkaline earth metal at values of less than 600 mVvsLi°.

8. Method according to Claim 6, characterised in that the polar aprotic solvent is selected from the group formed by ether solvents and substituted amine-based solvents.

9. Method according to Claim 8, characterised in that the polar aprotic solvent is selected from the group consisting of THF, dioxolane, glymes and crown ethers.

10. Method according to Claim 8, characterised in that the polar aprotic solvent is selected from the group consisting of N,N,N',N'-tetramethyl 1,2-ethane diamine, N,N,N',N',-tetramethyl 1,3-propane diamine, and N,N,N',N'',N''-pentamethyl diethylene triamine.

11. Method according to Claim 6, characterised in that the compound containing conjugated double bonds is selected from the group consisting of naphthalene, biphenyl, anthracene and benzophenone.

12. Method according to Claim 6, characterised in that the organic diluent is selected from the group consisting of benzene, toluene, alkanes and a mixture of the latter.

13. Method according to Claim 6, characterised in that the molar ratios of the constituents of the organic solution are as follows:

| | |
|---|---|
| polar aprotic solvent: | $10^{-5}$ to $<1$ |
| Compound containing conjugated double bonds: | $10^{-5}$ to 0.2 |
| organic diluent: | $<1$. |

14. Method according to Claim 13, characterised in that the molar ratios are as follows:

| | |
|---|---|
| polar aprotic solvent: | $10^{-3}$ to 0.2 |
| compound containing conjugated double bonds: | $10^{-4}$ to 0.1 |
| organic diluent: | $<1$. |

15. Method according to Claim 13, characterised in that the organic solution consists of THF or N,N,N',N',-tetramethyl 1,2-ethane diamine, naphthalene or biphenyl and benzene, the molar ratios being as follows:
THF or N,N,N'N'-tetramethyl 1,2-ethane diamine: approximately $9 \times 10^{-2}$, biphenyl or naphthalene: approximately $7 \times 10^{-2}$, benzene: approximately 0.84.

16. Method according to Claim 1, characterised in that the organic solution is based on naphthalene or biphenyl.

17. Method according to Claim 1, characterised in that the organic solution is based on THF and N,N,N',N',-tetramethyl-1,2-ethane diamine.

18. Method according to Claim 6, characterised in that the organic solution is rich in inert diluent but poor in aromatic compounds and polar aprotic solvents compatible with lithium.

19. Method according to Claim 18, characterised in that the inert diluent consists of benzene.

20. Method according to Claim 1 characterised in that the host metal is selected from the group consisting of aluminium, magnesium, silicon, zinc, boron, mercury, silver and their alloys.

21. Method according to Claim 20, characterised in that the host metal consists of aluminium.

22. Method according to Claim 1, characterised in that the organic solution is based on benzene and contains naphthalene or biphenyl, N,N,N′,N′,-tetramethyl-1,2-ethane diamine or THF, and it is saturated with lithium in the radical form and contains in addition an excess of metallic lithium.

23. Method according to Claim 1, characterised in that the organic solution is based on benzene and contains naphthalene or biphenyl, N,N,N′,N′,-tetramethyl-1,2-ethane diamine or THF, and it is saturated with lithium in radical form and contains a limited quantity of metallic lithium such that the proportion of the alloy formed can be controlled.

24. Method according to Claim 4, characterised in that the organic solution containing lithium in a radical form is in contact with a lithium source.

25. Method according to Claim 1, characterised in that the metal structure containing the said host metal is formed of a metal strip comprising a flat layer of the host metal.

26. Method according to Claim 25, characterised in that the metal strip is selected from copper, molybdenum and nickel.

27. Method according to Claim 26, characterised in that the flat layer of host metal comprises aluminium.

28. Method according to any one of Claims 25 to 27, characterised in that the thickness of the metal strip varies between approximately 1 µm and 25 µm, whereas the thickness of the host metal layer varies between approximately 5 µm and 50 µm and, preferably, is approximately 25 µm.

29. Method according to Claim 1, characterised in that the metal structure containing the said host metal consists of a metal strip comprising a layer of the host metal which has a dendritic appearance.

30. Method according to Claim 29, characterised in that the metal strip is selected from copper, molybdenum and nickel.

31. Method according to Claim 30, characterised in that the dendritic layer of host metal is aluminium.

32. Method according to any one of Claims 29 to 31, characterised in that the total thickness of the dendritic layer of host metal varies between approximately 5 µm and 50 µm.

33. Method according to Claim 1, characterised in that the metal structure containing the said host metal consists substantially of a strip of the host metal.

34. Method according to Claim 33, characterised in that the metal structure consists of an aluminium strip.

35. Method according to Claim 34, characterised in that the thickness of the aluminium strip varies between 1 µm and 200 µm: and in that the reaction is allowed to continue so as to obtain a strip which is completely converted into alloy.

36. Method according to Claim 34, characterised in that the thickness of the aluminium strip varies between approximately 5 µm and 500 µm; and in that the reaction is allowed to continue in such a way that the strip has one or two alloyed faces and an area which has not reacted, and such that co-existence between the alloy formed and the host structure which has not reacted is maintained.

37. Method according to Claim 36, characterised in that the thickness of the aluminium strip varies between approximately 50 µm and 300 µm.

38. Method according to Claim 35, characterised in that the completely alloyed strip is dissociated into alloy particles.

39. Method according to Claim 1, characterised in that the host structure consists of a mixture of spheres, fibres or flakes of the host metal which are brought into contact with the organic solution to form spheres, fibres or flakes of alloys.

40. Method according to Claim 39, characterised in that one of the dimensions of the spheres, fibres or flakes of the host metal does not exceed 50 µm and that the alloy films are formed on these particles.

41. Method according to Claim 39, characterised in that the host structure consists of particles of Al, Mg, Si, Zn in the form of spheres, flakes or fibres having a grain size previously selected so as to form lithium alloys having stoichiometries similar to $LiAl$, $Li_{0,9}Mg$, $Li_{3,5}Si$, $LiZn$, from a radical solution of this metal.

42. Method according to Claim 3, characterised in that the organic solution is based on naphthalene, in which the activity of the lithium radicals is between approximately 200 and approximately 400 mVvsLi°.

43. Method according to Claim 3, characterised in that the organic solution is based on biphenyl, in which the lithium radical activity is between approximately 200 and approximately 80 mVvsLi°.

44. Application of a metal alloy containing an alkaline or alkaline earth metal and a host metal and obtained by the method according to any one of Claims 1 to 43, in the production of alloyed metal electrodes by bringing the said alloy into contact with a polymeric electrolyte.

45. Application according to Claim 44, characterised in that the polymeric electrolyte is based on at least one polyether.

46. Application according to Claim 44, characterised in that the alloy is brought into contact with the polymeric electrolyte in such a way that areas in which the alloy is not penetrated by the said polymer are defined in the electrode.

47. Application according to Claim 44 or 45, characterised in that the electrolyte is brought into contact with the alloy in the molten state.

48. Application according to Claim 44 or 45, characterised in that the electrolyte is brought into contact with the alloy in the solution state, the said solution being compatible with the alloy.

49. Application according to Claim 44, characterised in that the metal electrode obtained has a predetermined morphology; and, for this purpose, the metal structure used to form the alloy is formed in such a way that it is a precursor of the final morphology of the said electrode which will help to form electrodes in thin films.

50. Alloyed metal electrode consisting of an alloy of a host metal and an alkaline or alkaline earth metal, the said alloy being obtained by the method according to any one of Claims 1 to 43, and of a polymeric electrolyte in contact with the said alloy.

51. Electrode as claimed in Claim 50, characterised in that the polymeric electrolyte is based on at least one polyether.

FIG_1

FIG_2

## FIG.3

POTENTIEL (VOLTS)

2,0

1,0

D-2

D-5

D-15

NOMBRE DE COULOMBS EN DECHARGE

2    4    6    8    10

METAL HOTE

## FIG.4

METAL (exemple Cu, Mo, Ni)

METAL HOTE

METAL HOTE

## FIG.5

METAL (exemple Cu, Mo, Ni)

METAL HOTE

FIG. 6

METAL HOTE ALLIE    METAL HOTE

METAL HOTE ALLIE

FIG. 7

FIG. 8

FIG. 9

FIG_10

EP 0 159 266 B1

FIG. 11

FIG. 12